# NEUE EUROPÄISCHE PATENTSCHRIFT

(11) **EP 1 026 431 B2**
(45) Veröffentlichungstag und Bekanntmachung des Hinweises auf die Entscheidung über den Einspruch: **08.02.2006**
(45) Hinweis auf die Patenterteilung: 14.11.2001
(21) Anmeldenummer: 00250013.0
(22) Anmeldetag: 17.01.2000
(51) Int. Cl.: F16L 13/14, F16L 13/16, B21D 39/04

(54) **Rohrpressverbindung**
Pressfitting for pipes
Raccord à compression

(30) Priorität: 01.02.1999 DE 19905123
(43) Veröffentlichungstag der Anmeldung: 09.08.2000
(73) Patentinhaber: Geberit Mapress GmbH, 40764 Langenfeld (DE)
(72) Erfinder: Speckemeyer, Jens, 45475 Mülheim (DE)
(74) Vertreter: Meissner, Peter E.

(56) Entgegenhaltungen:
- EP-A- 0 870 964
- WO-A-97/17563
- US-A- 5 168 618

## Beschreibung

Die Erfindung betrifft eine Rohrverbindung, be stehend aus einem Preßfittingelement und einem darin eingeschobenen Leitungsrohr gemäß dem Oberbegriff des Patentanspruches 1.

Eine gattungsbildende Rohrverbindung ist aus der EP 0 870 964 A1 bekannt. Diese besteht aus einem Preßfittingelement, das einen hakenförmigen, im Querschnitt dachartig ausgebildeten, einen Dichtring aufnehmenden Bereich aufweist. Daran schließt sich ein der Einschubseite abgewandter, zylindrisch ausgebildeter Bereich an, der einen Anschlag bildend übergeht in einen ebenfalls zylindrisch ausgebildeten Bereich, der einen geringeren Innendurchmesser aufweist als der vorhergehende Bereich. Das einzuschiebende Leitungsrohr kommt am inneren Anschlag des Preßfittingelementes zur Anlage und mittels eines das Preßfittingelement umfassenden, mindestens zwei Preßbacken aufweisenden Preßwerkzeuges wird nach dem Ansetzen und Schließen eine unlösbare, dichte Rohrverbindung gebildet. Während des Verpressens wird sowohl auf den hakenförmigen Bereich einschließlich des darin eingelegten Dichtringes, als auch auf den der Einschubseite abgewandten zylindrisch ausgebildeten Abschnitt des Preßfittingelementes eingewirkt. Der hakenförmige Bereich ist symmetrisch ausgebildet, wobei die beiden innenliegenden Flanken einen Winkel einschließen, der zwischen 55 Grad und 65 Grad, vorzugsweise bei 60 Grad liegt. Diese vorgeschlagene Ausbildung des Preßfittingelementes ist ungünstig, da sie das Fließverhalten des hakenförmig ausgebildeten Bereiches nur unzureichend berücksichtigt. Versuche haben gezeigt, daß sich bei einer solchen Form unzulässige Grate bilden. Außerdem wird der Dichtring nicht ausreichend komprimiert, so daß die Langzeitdichtwirkung in Frage gestellt ist: Eine Lösungsmöglichkeit bietet sich in der Form an, daß die Kontur der Preßbacke verändert wird und möglicherweise auch ein anderer Dichtring verwendet wird, so daß die zuvor geschilderten Nachteile vermeidbar sind.

Dem steht aber entgegen, daß seit Einführung des Verfahrens des Verpressens eines Preßfittingelementes mit eingeschobenem Leitungsrohr vor mehr als 25 Jahren zunehmend mehr und mehr Preßwerkzeuge mit den auf die jeweilige zu verpressende Nennabmessung abgestimmten Preßbacken auf den Markt gekommen sind. Gegenwärtig befinden sich mehr als 150.000 Preßbacken auf dem Markt. Die Vorteile des Verpressens statt Schweißen oder Löten sowie Verschrauben oder Kleben sind im Laufe der Jahre auch von den als konservativ einzustufenden Anwendern im Heizungs- und Sanitärbereich anerkannt worden.

Vor diesem Hintergrund stellte sich die Aufgabe, eine Rohrverbindung mit einem Preßfittingelement anzugeben, das bei Verwendung der sich bewährten Querschnittskontur der im Markt sich befindenden Bakken des Preßwerkzeuges für die verschiedenen genormten Abmessungen zusammen mit dem darin eingeschobenen Leitungsrohr qualitativ einwandfrei verpreßbar ist. Eine weitergehende Aufgabe besteht darin, auch den zu einer Nennabmessung zugehörigen Dichtring unverändert zu verwenden.

Diese Aufgabe wird ausgehend vom Oberbegriff in Verbindung mit den kennzeichnenden Merkmalen des Patentanspruches 1 gelöst. Vorteilhafte Weiterbildungen sind Bestandteil von Unteransprüchen.

Umfangreiche Untersuchungen haben ergeben, daß das Fließverhalten des hakenförmig ausgebildeten Bereiches besser berücksichtigt wird, wenn der die beiden innenliegenden Flanken einschließende Gesamtwinkel 50 Grad beträgt. Diese Aussage gilt unter der Voraussetzung, daß wie schon zuvor erwähnt, beim Verpressen die im Markt sich befindenden Backen des Preßwerkzeuges mit der sich bewährten Querschnittskontur unverändert verwendet werden.

Dabei ist der Gesamtwinkel in bezug auf die Mittelachse des hakenförmig ausgebildeten Bereiches unsymmetrisch ist, wobei der der Einschubseite zugewandte Teilwinkel 30 Grad und der andere Winkel 20° beträgt.

Bei weichen Werkstoffen wie z. B. Kupfer ist beim Verpressen im Vergleich zu Stahl die Gefahr größer, daß der Übergang vom hakenförmig ausgebildeten Bereich in den zylindrischen Bereich abgequetscht wird. Um dies zu vermeiden, sollte beim Ansetzen der Preßbacken der hakenförmige Bereich möglichst tief in der Ausnehmung der Preßbacke liegen. Realisieren kann man das in der Weise, daß man die axiale Abstrekkung verringert durch Verringerung der Wanddicke des hakenförmig ausgebildeten Bereiches im Vergleich zum zylindrisch ausgebildeten Bereich. Die Abstreckung der Wanddicke im hakenförmig ausgebildeten Bereich hat außerdem den Vorteil, daß ein Teil der herstetibedtngten Toleranzen des als Vormaterial eingesetzten Rohrabschnittes zur Herstellung des Preßfittingelementes egalisiert werden können.

Im Falle der Verwendung von Kupfer beträgt bei zu verbindenden Rohren mit einem Nenndurchmesservon mindestens 22 mm bis zu 54 mm die Nennwanddicke des Preßfittingelementes im zylindrisch ausgebildeten Bereich 1,5 mm. Dies ist ein Wert, der auch für aus C-Stahl oder hochlegiertem Stahl hergestellte Preßfittingelemente üblich ist. Die vorgeschlagene verringerte Wanddicke im hakenförmig ausgebildeten Bereich beträgt dagegen nur 1,35 mm. Bei der Verringerung der Wanddicke auf 1,35 mm wurde berücksichtigt, daß der davon betroffene Bereich des Preßfittingelementes noch genügend Steifigkeit besitzt, um den darunter liegenden Dichtring bei der Verpressung ausreichend elastisch zusammendrücken zu können. Diese Kompression ist erforderlich für eine ausreichende Dichtfunktion des Dichtringes. Für Nenndurchmesser kleiner 22 mm kann je nach Festigkeitsanforderung die Nennwanddicke auch unter 1,5 mm liegen. Beispielsweise kann die Nennwanddicke des zylindrisch ausgebildeten Bereiches für eine Nennabmessung kleiner 22 mm 1,3 mm und die Wanddicke im hakenförmig ausgebildeten Bereich 1,2 mm betragen.

In der Zeichnung wird anhand eines Ausführungsbeispieles die erfindungsgemäß ausgebildete Rohrverbindung näher erläutert. Es zeigen:
- Figur 1: einen hälftigen Längsschnitt durch ein erfindungsgemäß ausgebildetes Preßfittingelement einschl. des eingeschobenen . Leitungsrohres
- Figur 2: wie Figur 1, jedoch mit angesetzter Preßbacke

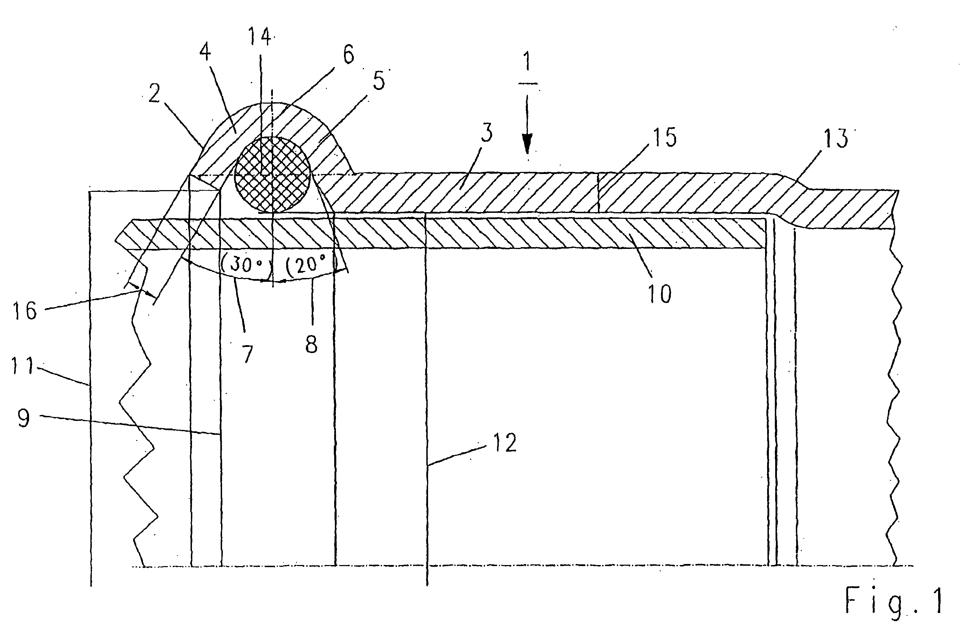

In Figur 1 ist ein hälftiger Längsschnitt eines erfindungsgemäß ausgebildeten Preßfittingelementes 1 zusammen mit einem eingeschobenen Leitungsrohr 10 dargestellt. Dabei kann dieses dargestellte Preßfittingelement 1 ein Teil eines Bogens, eines T-Stückes, einer Muffe oder eines Reduzierstückes sein. Das Preßfittingelement 1 weist einen hakenförmig, im Querschnitt dachartig ausgebildeten Bereich 2 auf, an den sich ein in Längsrichtung erstreckender zylindrisch ausgebildeter Bereich 3 anschließt. Bei dem hierdargestellten Preßfittingelement 1 bildet der hakenförmig ausgebildete Bereich 2 ein Dach mit zwei Schenkeln 4,5. Die innenliegenden Flanken der beiden Schenkel 4,5 schließen einen Gesamtwinkel ein, der gleich 50 Grad ist. Erfindungswesentlich ist, daß der Winkel in bezug auf die Mittelachse 6 unsymmetrisch ist. Der der Einschubseite zugewandte Teilwinkel 7 ist größer als der andere Teilwinkel 8. in diesem Ausführungsbeispiel ist das Verhältnis 30 Grad zu 20 Grad. Das radiale Erstreckungsende des auf der Einschubseite liegenden Schenkels 4 des hakenförmig ausgebildeten Bereiches 2 bildet eine kreisrunde Öffnung 9. Der Durchmesser 11 dieser Öffnung 9 ist dabei mindestens um 0,8 mm größer als der Innendurchmesser 12 des zylindrisch ausgebildeten Bereiches 3. Am Ende der Längserstreckung des zylindrisch ausgebildeten Bereiches 3 ist eine radial nach innen sich erstrekkende Vertiefung 13 angeformt, die als Anschlag für das einzuschiebende Leitungsrohr 10 dient.

Die Innenkontur des hakenförmig ausgebildeten Bereiches 2 ist der Außenkontur des eingelegten Dichtringes 14 angepaßt.

Für den Abmessungsbereich der einzuschiebenden Leitungsrohre 10 von mindestens 22 bis 54 mm äußerer Durchmesser weist das Preßfittingelement 1 im zylindrisch ausgebildeten Bereich 3 eine Wanddicke 15 von 1,5 mm auf. Um die plastische Verformung des hakenförmig ausgebildeten Bereiches 2 auch für weiche Werkstoffe wie z. B. Kupfer optimal zu gestalten, ist die Wanddicke 16 im hakenförmig ausgebildeten Bereich 2 verringert, und zwar auf 1,35 mm.

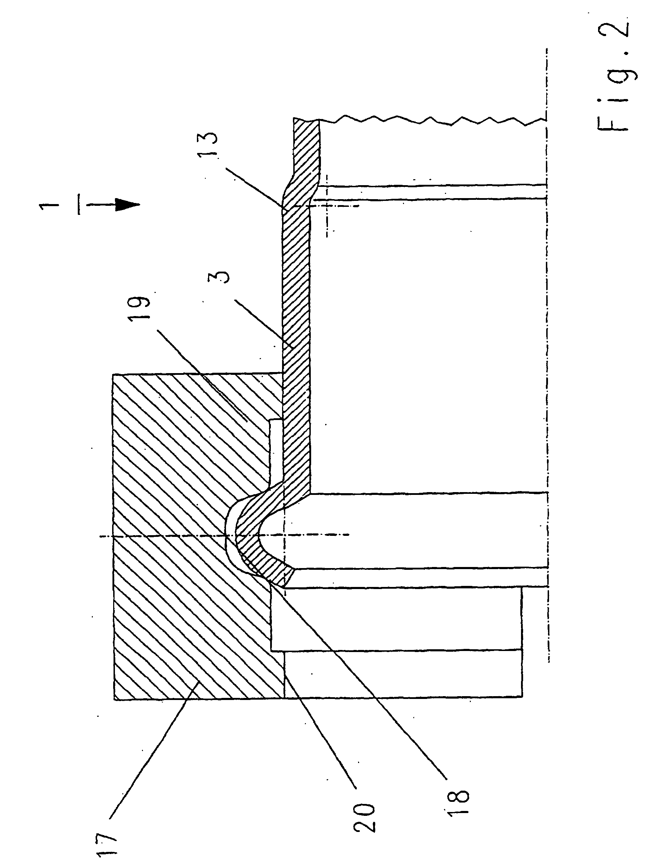

Figur 2 zeigt das gleiche Preßfittingelement 1 von Figur 1, aber mit angesetzter Preßbacke 17. Im Längsschnitt weist die Preßbacke 17 eine ringförmige Ausnehmung 18 auf, um damit den hakenförmig ausgebildeten Bereich 2 plastisch zu verformen. Für die Anformung der Festigkeitsebene ist mindestens in einem Endbereich der Preßbacke 17 ein Preßsteg 19 vorgesehen. Um das Preßwerkzeug mit den Preßbacken 17 auch anders herum ansetzen zu können, weist im Regelfall die jeweilige Preßbacke 17 im anderen Endbereich ebenfalls einen Preßsteg 20 auf. Gut zu erkennen ist in dieser Darstellung, daß durch die Verringerung der Wanddicke 16 im hakenförmig ausgebildeten Bereich 2 die Preßbacke 17 beim Ansetzen tiefer liegt und der Scheitelbereich des hakenförmig ausgebildeten Bereiches 2 weit in die ringförmige Ausnehmung 18 der Preßbacke 17 hineinragt. Damit ist eine optimale plastische Verformung des hakenförmig ausgebildeten Bereiches 2 sichergestellt.

## Patentansprüche

1. Rohrverbindung, bestehend aus einem Pressfittingelement, das einen hakenförmig, im Querschnitt dachartig ausgebildeten, einen Dichtring aufnehmenden Bereich und einen daran anschließenden, der Einschubseite abgewandten zylindrisch ausgebildeten Bereich aufweist, der einen Anschlag bildend in einen daran anschließenden zylindrisch ausgebildeten Bereich übergeht, wobei beide innenliegenden Flanken des dachartig ausgebildeten Bereiches in bezug auf die vertikale Mittelachse schräg verlaufen und einem Leitungsrohr dessen glattendiger Endbereich nach dem Einschub in das Pressfittingelement am inneren Anschlag des Pressfittingelementes zur Anlage kommt und mittels eines das Pressfittingelement umfassenden mindestens zwei Pressbacken aufweisenden Presswerkzeuges nach dem Ansetzen und Schließen eine unlösbare, dichte Rohrverbindung gebildet wird, wobei während des Verpressens die Pressbacken sowohl auf den hakenförmig ausgebildeten Bereich einschließlich des darin eingelegten Dichtringes, als auch auf den der Einschubseite abgewandten zylindrisch ausgebildeten Abschnitt des Pressfittingelementes einwirken,
**dadurch gekennzeichnet,**
**daß** im Querschnitt gesehen die Teilwinkel (7,8) beider innenliegenden Flanken des dachartig ausgebildeten Bereiches (2) einen Gesamtwinkel gleich 50 Grad einschließen, wobei der der Einschubseite zugewandte Teilwinkel (7) 30 Grad und der andere Teilwinkel (8) 20 Grad beträgt.

2. Rohrverbindung nach Ansprüche 1, **dadurch gekennzeichnet, daß** die Wanddicke (16) im dachartig ausgebildeten Bereich (2) geringer ist als die (15) des zylindrisch ausgebildeten Bereiches (3).

3. Rohrverbindung nach Anspruch 2,
**dadurch gekennzeichnet,**
**daß** für zu verbindende Rohre mit einem Nenndurchmesser von mindestens 22 bis 54 mm die Nennwanddicke (15) des Pressfittingelementes (1) im zylindrisch ausgebildeten Bereich (3) 1,5 mm und im dachartig ausgebildeten Bereich (2) 1,35 mm beträgt und für Nenndurchmesser kleiner 22 mm je nach Festigkeitsanforderung die Nennwanddicke (15) geringer sein kann als 1,5 mm.

4. Rohrverbindung nach Anspruch 3,
**dadurch gekennzeichnet,**
**daß** für Nenndurchmesser kleiner 22 mm die Nennwanddicke (15) des Pressfittingelementes im zylindrisch ausgebildeten Bereich (3) 1.3 mm und im dachartig ausgebildeten Bereich (2) 1.2 mm beträgt.

## Claims

1. Pipe connector consisting of a press fitting element that has a hook-shaped area which is shaped like a roof in cross-section and which accepts a sealing washer, and an area adjacent to it that is cylindrical in shape and that faces away from the insertion side, and that changes into an adjacent cylindrical area, thereby forming a limit stop, wherein the two inside flanks of the roof-shaped area lie at an angle in relation to the vertical central axis, and consisting of a conduit pipe, the smooth-ended end area of which rests against the inner limit stop of the press fitting element after being inserted into the press fitting element, and, after applying and closing a compression tool with at least two pressing jaws that encircles the press fitting element, a non-detachable and leakproof pipe connection is formed, wherein, during the pressing process, the pressing jaws act both on the hook-shaped area including the sealing washer placed inside it and on the cylindrical area of the press fitting element that faces away from insertion side,
**characterised in that**
when viewed in cross-section, the pitch angles (7, 8) of the two inside flanks of the roof-shaped area (2) enclose a total angle equal to 50 degrees, the pitch angle (7) that faces the insertion side being 30 degrees and the other pitch angle (8) being 20 degrees.

2. Pipe connector as in claim 1,
**characterised in that**
the wall thickness (16) in the roof-shaped area (2) is less than that (15) of the cylindrical area (3).

3. Pipe connector as in claim 2,
**characterised in that**
where the pipes to be connected have a nominal diameter of at least 22 to 54 mm, the nominal wall thickness (15) of the press fitting element (1) is 1.5 mm in the cylindrical area (3) and 1.35 mm in the roof-shaped area (2), and for nominal diameters of less than 22 mm, the nominal wall thickness (15) can be less than 1.5 mm depending on the strength required.

4. Pipe connector as in claim 3,
**characterised in that**
for nominal diameters of less than 22 mm, the nominal wall thickness (15) of the press fitting element is 1.3 mm in the cylindrical area (3) and 1.2 mm in the roof-shaped area (2).

## Revendications

1. Liaison pour tube, constituée d'un élément d'ajustage à la presse, qui présente une zone en forme de crochet, réalisée en section transversale en forme de toit, recevant une bague d'étanchéité, et une zone s'y raccordant, éloignée du côté d'introduction, réalisée de façon cylindrique, qui, en formant une butée, se transforme en une zone s'y raccordant réalisée de façon cylindrique, les deux flancs internes de la zone réalisée en forme de toit s'étendant de façon inclinée relativement à l'axe central vertical, et d'un conduit, dont la zone d'extrémité lisse vient en appui, après l'introduction dans l'élément d'ajustage à la presse, contre la butée interne de l'élément d'ajustage à la presse et, au moyen d'un outil de pressage comportant l'élément d'ajustage à la presse et présentant au moins deux mâchoires de pressage, après la mise en place et la fermeture, il est formé une liaison pour tube étanche inamovible, les mâchoires de pressage agissant, pendant le pressage, aussi bien sur la zone réalisée en forme de crochet y compris la bague d'étanchéité montée dans celle-ci qu'également sur le tronçon, éloigné du côté d'introduction, réalisé de façon cylindrique, de l'élément d'ajustage à la presse,
**caractérisée en ce que**, en section transversale, les angles partiels (7, 8) des deux flancs internes de la zone (2) réalisée en forme de toit forment un angle total égal à 50°, l'angle partiel (7) en regard du côté d'introduction étant égal à 30° et l'autre angle partiel (8) étant égal à 20°.

2. Liaison pour tube selon la revendication 1,
**caractérisée en ce que** l'épaisseur de paroi (16) dans la zone (2) réalisée en forme de toit est plus faible que celle (15) de la zone (3) réalisée de façon cylindrique.

3. Liaison pour tube selon la revendication 2,
**caractérisée en ce que**, pour des tubes à relier ayant un diamètre nominal d'au moins 22 à 54 mm, l'épaisseur de paroi nominale (15) de l'élément d'ajustage à la presse (1) dans la zone (3) réalisée de façon cylindrique vaut 1/5 mm, et 1,35 mm dans la zone (2) réalisée en forme de toit et, pour un diamètre nominal inférieur à 22 mm, selon l'exigence de résistance mécanique, l'épaisseur de paroi nominale (15) peut être inférieure à 1,5 mm.

4. Liaison pour tube selon la revendication 3,
**caractérisée en ce que**, pour un diamètre nominal inférieur à 22 mm, l'épaisseur de paroi nominale (15) de l'élément d'ajustage à la presse vaut, dans la zone (3) réalisée de façon cylindrique, 1,3 mm et, dans la zone (2) réalisée en forme de toit, 1,2 mm.
